# EUROPEAN PATENT APPLICATION

(11) **EP 2 123 157 A2**
(43) Date of publication of application: **25.11.2009**
(21) Application number: 09008826.1
(22) Date of filing: 30.12.2002
(51) Int. Cl.: A01N 25/00, A01N 65/00

(54) **Biorational insecticide/fungicide and method of application**

(30) Priority: 31.12.2001 US 344671 P
(62) Divisional of application: 02806143.0
(71) Applicant: Citrus Oil Products, Inc., Trophy Club, TX 76262 (US)
(72) Inventor: Erroll, Pullen, M., Bantry Bay, 8005 (ZA)
(74) Representative: Kador & Partner

(57) **Abstract**

A biorational insecticide and fungicide and method of application on trees and plants, fruits and vegetables to enhance the growth thereof and to effectively control insects and fungi comprising at least one surfactant and at least one high terpene natural oil.

## Description

### Technical Field

A biorational insecticide and fungicide for plants and trees.

### Background Art

Various insects such as lice, ticks, mites, aphides and chiggers attack untreated and unprotected trees and plants. Moreover, fungi left uncontrolled can damage and even destroy plants and trees including crops associated therewith.

In the past, various oils have been used to control insects and mites. Recently, however, renewed attention has focused on the use of oils as a natural substitute for traditional insecticides with attendant toxic and other dangerous side effects.

These oils include horticultural oils that are highly refined petroleum products than can be mixed with water for application for control of target insect and mite pests without deleterious effects. Modern horticultural oils do not include vegetable, fish or whale oils.

Horticultural spray oils are the low toxicity alternative to broad spectrum insecticides. Since the mechanism of insect and mite control with spray oils is by suffocation and/or repellency of egg laying females, there is no requirement for the addition of toxic chemicals. These properties are a valuable and well recognized component of the practice of integrated pest management where oil spraying is intrinsically linked to natural control of pests by predators and parasitoids.

Horticultural spray oils are formulated on highly refined dear oil with a minimum of nonionic surfactant. Independent environmental impact studies have shown that D-C-TRON has no detrimental effect on the environment. Mammalian toxicity studies published in the American Journal of Industrial Medicine have shown that oils at this refinement level are non-toxic and non-carcinogenic.

Generally, oil sprays are safe to humans. These oil sprays have little, if any, negative effect on wildlife and non-target insects in the environment. Furthermore, oil sprays are less toxic due to the method by which they kill target pests. In particular, the thin film of oil covers the target insect or mite and plugs the spiracles or pores through which the pests or parasites breathe. The cause of death is primarily suffocation. Large, motile insects and animals that breathe by another method are not affected by these oils.

Another advantage of oil applications is the absence of objectionable odors. In addition, oils are relatively inexpensive and significantly less expensive than many insecticides.

Unfortunately, there are limitations to the use of oil treatments. For example, oils are only effective against those pests that are thoroughly coated by the spray solution. This usually means that only small, immobile or slow moving pests that are exposed on the surface of the plant or tree at the time of application will be controlled.

Since oil sprays only work by contracting and covering the target pest, thorough application is essential. Missed surface areas provide a safe refuge for the target pests.

U.S. 6,258,369 and U.S. 6,277,389 disclose a non-toxic aqueous pesticide for application on plants and animals comprising at least one surfactant and at least one high terpene containing natural oil. The pesticide is used to effectively control insects and parasites such as darkling beetles, lice, ticks, mites, flies, aphides, mosquitoes and chiggers found on plants and animals.

U.S. 5,693,344 shows a hazard-free method for controlling insects using a non-toxic composition in the form of a fragrance and crystalline particles which puncture directly through the exoskeleton of an insect. In operation, the particles work themselves between the insect's protective body plates and then puncture the exoskeleton permitting entry of the fragrance into the body of the insect. Once inside, the particles absorb up to four times their weight of the vital body fluids of the insect and the fragrance has a neural effect on the insect.

U.S. 5,143,939 shows a method of treating soil and agricultural crops for controlling worms and nematodes comprising a nonionic surfactant, namely an alkylox-ypolyethyleneoxyethanol used as the sole active ingredient to control fungus, mites, worms, termites, nematodes and other insects.

U.S. 4,379,168 relates to pesticides containing d-limonene as an insect-killing ingredient with surfactants or emulsifiers and water. The pesticide compositions are liquids designed for use as a dip to rid small animals of fleas and ticks, a spray to kill fleas and ticks on small animals and in the kennels of small animals; a spray to kill fies on small animals and in the kennels of small animals; and a spray or liquid to rid household areas of cockroaches and other insect pests.

U.S. 6,248,710 B1 discloses a water-soluble or water-dispersible material for deposition onto a fabric substrate during a treatment process comprising polysaccharide structure having at least one substituent benefit agent group and optionally, one or more other substituent groups. The polysaccharide structure has one or more regions with at least 3, preferably at least 4 consecutive unsubstituted saccharide rings.

### Disclosure of Invention

The present invention relates to an environmentally compatible composition formulated for use with various plants and trees, fruits and vegetables comprising at least one surfactant and at least one high terpene containing oil to kill various insects and reduce and control fungi. The invention also includes the method of application of the composition.

High terpene containing natural oil as used herein means those natural oils having a terpene content of at least 50 per cent. It is preferable that the high terpene natural oil contains at least 65 per cent Suitable high terpene containing natural oils Includes oil from conifers such as citrus peel oils, preferably orange oil, grapefruit oil, lemon oil or pine oil. Of these, orange oil is preferred and cold pressed orange oil the most preferred. The preferred terpene content is from about 80 per cent to about 90 per cent and most preferred from about 85 per cent to about 87 per cent, all by weight

The amount of high terpene containing natural oils in the composition depends upon the amount of terpenes in the specific oil used. Generally, the composition contains from about 3 per cent by weight to about 7 per cent by weight of high terpene containing natural oil, preferably about 5 per cent by weight.

Anionic and nonionic surfactants are acceptable for use in the composition of the present invention. Anionic surfactants such as salts of fatty adds, alkyl sulphates, alkyl ether sulphonates and alkyl aryl sulphonates are preferred.

The composition may also contain preservatives, pH neutralizers and/or clarifiers or stabilizers. The balance of the composition is water.

In use, the biorational insecticide and fungicide is diluted and sprayed or misted on the plants or trees, fruits or vegetables.

When so applied, the composition is effective in controlling various insects including darkling beetles, lice, ticks, mites, flies, aphides, thrips, mealybugs, mosquitoes and chiggers. While not to be bound by theory, the mechanism of insect control is believed to be the breakdown of the protective covering of soft bodied insects, exposing the insects to atmospheric conditions leading to desiccation and eventual death. Flying insects lose the use of their wings caused by the loss of the protective covering and loss of tension in the wings. Initially after spraying the wings tend to stick together, preventing the insect from escaping. Apart from this, it is believed that these products may also enter the digestive and respiratory tracts, debilitating the insects, eventually leading to their demise.

The composition is also effective in controlling fungi. While not to be bound by theory, mechanism of fungi control is believed to be the wetting of the surface protective layer on the fungal mycelia, sproangia and spores, exposing them to the drying capabilities of the atmosphere. The same happens to plant tissue damaged by the fungus, but healthy plant tissue such as leaves and shoots is not affected. Dying of the fungal mycelia prevents the spread of mycelia into new tissue, while the sporangia cannot sporulate to form new infective spores. Spores that have already spread and are lying dormant, waiting for favorable conditions, may also be affected in the same way.

Finally, the composition enhances water penetration and absorption by the soil as well as decreases waterlogging. These better soil conditions lead to improved root and plant growth.

There is no requirement for the addition of toxic chemicals thereby causing an imbalance in the insect and/or parasite's delicate body moisture balance. As such, the instant invention provides a virtually non-toxic alternative to broad spectrum insecticides.

The invention accordingly comprises the features of construction, combination of elements, and arrangement of parts which will be exemplified in the construction hereinafter set forth, and the scope of the invention will be indicated in the claims.

### Best Mode for Carrying Out the Invention

The present invention relates to a biorational insecticide and fungicide or environmentally compatible composition formulated for use with various trees and plants, fruits and vegetables comprising at least one surfactant and at least one high terpene containing oil to enhance the growth thereof and to effectively control insects and fungi. The invention also includes the method of application of the composition.

High terpene containing natural oil as used herein means those natural oils having a terpene content of at least about 50 per cent. It is preferable that the high terpene natural oil contains at least about 65 per cent Suitable high terpene containing natural oils includes oil from conifers such as citrus peel oils, preferably orange oil, grapefruit oil, lemon oil or pine oil. Of these, orange oil is preferred and cold pressed orange oil the most preferred. The preferred terpene content is from about 80 per cent to about 90 per cent and most preferred from about 85 per cent to about 87 per cent, all by weight.

The amount of high terpene containing natural oils in the composition depends upon the amount of terpenes in the specific oil used. Generally, the composition contains from about 3 per cent by weight to about 7 per cent by weight of high terpene containing natural oil, preferably about 5 per cent by weight.

Anionic and nonionic surfactants are acceptable for use in the composition of the present invention. Anionic surfactants such as salts of fatty adds, alkyl sulphates, alkyl ether sulphonates and alkyl aryl sulphonates are preferred. Examples of such surfactants may include from about 8 per cent to about 12 per cent sulfonic acid, preferably about 10 per cent sulfonic add; from about 5 per cent to about 9 per cent sodium laurel sulfate, preferably about 6.8 per cent sodium laurel sulfate; from about 6 per cent to about 10 per cent alcohol ethoxylate, preferably about 8.2 per cent alcohol ethoxylate; and from about 1 per cent to about 3 per cent olefin sulfonate, preferably about 1.7 olefin sulfonate, all by weight.

Generally, the composition contains from about 20 per cent to about 34 per cent surfactant(s), preferably from about 25 per cent to about 30 per cent surfactant(s) and most preferably about 26.7 per cent surfactant(s), all by weight.

The composition may also include butylated hydroxytoluene, p-Hydroxybenzoic acid and/or sodium tetraborate decahydrate. The range of butylated hydroxytoluene is from about 0.05 per cent to about 0.15 per cent and preferably about 0.10 per cent, all by weight. The range of sodium tetraborate decahydrate is from about 0.89 per cent to about 1.09 per cent and preferably about 0.99 per cent, all by weight. The range of p-Hydroxybenzoic acid is from about 0.45 per cent to about 0.65 per cent and preferably about 0.55 per cent, all by weight. Generally, the composition contains from about 1.39 per cent to about 1.89 per cent preservative(s), preferably about 1.64 per cent preservative(s), all by weight.

In addition, a bactericide such as Dowicil is from about 0.05 per cent to about 0.15 per cent and preferably about 0.10 per cent, all by weight may be added.

Caustic crystals such as sodium hydroxide may be added in an amount of from about 1.25 per cent to about 1.37 per cent by weight to neutralize the composition to a pH of from about 7.75 to about 9.

A clarifier or stabilizer such as urea may be added in an amount of from about 0.59 per cent to about 0.99 per cent and preferably about 0.79 per cent, all by weight.

The balance of the composition is made up by water.

The preferred composition comprises about 5 per cent cold pressed orange oil, about 6.8 per cent sodium lauryl sulfate, about 8.2 per cent of alcohol ethoxylate, about 1.7 per cent sodium olefin sulfonate, about 10 per cent dodecylbenzene sulphonic acid, about 0.1 per cent antioxidant such as butylate hydroxytoluene, about 0.45 per cent preservative such as p-Hydroxybenzoic acid, about 0.1 per cent bactericide such as Dowicil, about 0.99 per cent fungicide such as sodium tetraborate decahydrate, about 0.79 per cent clarifier such as urea and about 1.31 per cent neutralizer such as sodium hydroxide with the balance a diluent such as water, all by weight

In use as a combination insecticide and fungicide, the composition is diluted with water and sprayed or misted on the trees and plants, fruit or vegetable growth to directly contact the mold and mildew and/or insects. An effective range for the dilution rate is from about 0.25 per cent to about 1.5 per cent by weight. The preferred dilution rate is about 0.80 per cent by weight with a preferred range of from about 0.4 to about 1.0. The diluted composition is sprayed at an application rate of from about 120 liters (30 gallons) per acre to about 400 liters (100 gallons) per acre.

In use as an insecticide, the composition is diluted with water and sprayed or misted on insects. An effective range for the dilution rate is from about 0.4 per cent to about 1.5 per cent by weight. The preferred dilution rate is about 0.8 per cent by weight with a preferred range of from about 0.4 to about 0.8. The diluted composition is sprayed at an application rate of from about 120 liters (30 gallons) per acre to about 400 liters (100 gallons) per acre.

The targeted insects include alphids, flies, mites, lice, chiggers, thrips and ticks. The fungi comprise mildew, mold, leather rot, leaf spot, leaf scorch, leaf blight, red stele, verticullium wilt and black root rot.

In use as a fungicide, the composition is diluted with water and sprayed or misted on the trees and plants, fruit or vegetable growth to directly contact the mold and mildew. An effective range for the dilution rate is from about 0.2 per cent to about 0.6 per cent by weight. The preferred dilution rate is about 0.4 per cent by weight with a preferred range of from about 0.25 to about 0.5. The diluted composition is sprayed at an application rate of from about 120 liters (30 gallons) per acre to about 400 liters (100 gallons) per acre.

While the invention has been described above with respect to certain particular embodiments thereof, numerous other forms and modifications will be apparent to those skilled in the art. The appended claims and the invention generally should be construed as covering all such obvious forms and modifications that are within the true spirit and scope of the invention.

It will thus be seen that the objects set forth above, among those made apparent from the preceding description are efficiently attained and since certain changes may be made in the above construction without departing from the scope of the invention, it is intended that all matter contained in the above description shall be interpreted as illustrative and not in a limiting sense.

It is also to be understood that the following claims are intended to cover all of the generic and specific features of the invention herein described, and all statements of the scope of the invention that, as a matter of language, might be said to fall therebetween.

Now that the invention has been described, In the following clauses, preferred embodiments of the invention are described:
1. An environmentally compatible composition formulated for use with various trees and plants, fruits and vegetables to enhance the growth thereof and to effectively control insects and fungi, said composition comprising from about 20 per cent to about 34 per cent surfactant and a terpene containing natural oil having a terpene content of at least about 50 per cent with the balance water, all by weight.
2. The environmentally compatible composition of clause 1 wherein said composition contains from about 3 per cent to about 7 per cent of high terpene containing natural oil by weight.
3. The environmentally compatible composition of clause 2 wherein said composition contains from about 25 per cent to about 30 per cent surfactant, by weight.
4. The environmentally compatible composition of clause 1 wherein said composition contains about 27 per cent surfactant and about 5 per cent terpene containing natural oil, all by weight.
5. The environmentally compatible composition of clause 1 wherein said surfactant comprises from about 8 per cent to about 12 per cent sulfonic acid; from about 5 per cent to about 9 per cent sodium laurel sulfate ; from about 6 per cent to about 10 per cent alcohol ethoxylate and from about 1 per cent to about 3 per cent olefin sulfonate, all by weight.
6. The environmentally compatible composition of clause 1 wherein said surfactants comprises sulfonic acid, sodium laurel sulfate, alcohol ethoxylate and olefin sulfonate.
7. The environmentally compatible composition of clause 1 wherein said surfactants comprises about 10 per cent sulfonic acid; about 6.8 per cent sodium laurel sulfate ; about 8.2 per cent alcohol ethoxylate ; and about 1.7 olefin sulfonate, all by weight.
8. The environmentally compatible composition of clause 1 wherein said composition further comprises sodium tetraborate decahydrate.
9. The environmentally compatible composition of clause 1 wherein said composition further comprises from about 0.89 per cent to about 1.09 per cent sodium tetraborate decahydrate, by weight.
10. The environmentally compatible composition of clause 1 wherein said composition further comprises about 0.99 per cent sodium tetraborate decahydrate, by weight.
11. The environmentally compatible composition of clause 1 wherein said composition has a pH of from about 7.75 to about 9.
12. The environmentally compatible composition of clause 1 further comprising from about 1.25 per cent to about 1.37 per cent sodium hydroxide, by weight.
13. The environmentally compatible composition of clause 1 comprises about 5 per cent cold pressed orange oil, about 6.8 per cent sodium lauryl sulfate, about 8.2 per cent of alcohol ethoxylate, about 1.7 per cent sodium olefin sulfonate, about 10 per cent dodecylbenzene sulphonic acid and about 0.99 per cent sodium tetraborate decahydrate with the balance water, all by weight.
14. The environmentally compatible composition of clause 1 further comprises about 0.79 per cent urea by weight.
15. A method of controlling insects and fungi formed on fruits and vegetables by applying an environmentally compatible composition to the fruits and vegetables, said composition comprising from about 20 per cent to about 34 per cent surfactant and a terpene containing natural oil having a terpene content of at least about 50 per cent with the balance water, all by weight; said composition is diluted with water at a dilution rate of from about 0.25 per cent to about 1.5 per cent by weight.
16. The method of controlling insects and fungi of clause 15 wherein said composition is diluted with water at a dilution rate of about 0.8 by weight.
17. The method of controlling insects and fungi of clause 15 wherein an application rate is from about 30 gallons per acre to about 100 gallons per acre.
18. The method of controlling insects and fungi of clause 15 wherein said composition contains from about 3 per cent to about 7 per cent of high terpene containing natural oil by weight.
19. The method of controlling insects and fungi of clause 18 wherein said composition contains from about 25 per cent to about 30 per cent surfactant, by weight.
20. The method of controlling insects and fungi of clause 15 wherein said composition contains about 27 per cent surfactant and about 5 per cent terpene containing natural oil, all by weight.
21. The method of controlling insects and fungi of clause 15 wherein said surfactant comprises from about 8 per cent to about 12 per cent sulfonic acid; from about 5 per cent to about 9 per cent sodium laurel sulfate ; from about 6 per cent to about 10 per cent alcohol ethoxylate and from about 1 per cent to about 3 per cent olefin sulfonate, all by weight.
22. The method of controlling insects and fungi of clause 15 wherein said surfactants comprises sulfonic acid, sodium laurel sulfate, alcohol ethoxylate and olefin sulfonate.
23. The method of controlling insects and fungi of clause 15 wherein said surfactants comprises about 10 per cent sulfonic acid; about 6.8 per cent sodium laurel sulfate ; about 8.2 per cent alcohol ethoxylate ; and about 1.7 olefin sulfonate, all by weight.
24. The method of controlling insects and fungi of clause 15 wherein said composition further comprises sodium tetraborate decahydrate.
25. The method of controlling insects and fungi of clause 15 wherein said composition further comprises from about 0.89 per cent to about 1.09 per cent sodium tetraborate decahydrate, by weight.
26. The method of controlling insects and fungi of clause 15 wherein said composition further comprises about 0.99 per cent sodium tetraborate decahydrate, by weight.
27. The method of controlling insects and fungi of clause 15 wherein said composition has a pH of from about 7.75 to about 9.
28. The method of controlling insects and fungi of clause 15 further comprising from about 1.25 per cent to about 1.37 per cent sodium hydroxide, by weight.
29. The method of controlling insects and fungi of clause 15 comprises about 5 per cent cold pressed orange oil, about 6.8 per cent sodium lauryl sulfate, about 8.2 per cent of alcohol ethoxylate, about 1.7 per cent sodium olefin sulfonate, about 10 per cent dodecylbenzene sulphonic acid and about 0.99 per cent sodium tetraborate decahydrate with the balance water, all by weight.
30. The method of controlling insects and fungi of clause 15 further comprises about 0.79 per cent urea by weight.
31. A method of controlling insects formed on fruits and vegetables by applying an environmentally compatible composition to the fruits and vegetables, said composition comprising from about 20 per cent to about 34 per cent surfactant and a terpene containing natural oil having a terpene content of at least about 50 per cent with the balance water, all by weight; said composition is diluted with water at a dilution rate of from about 0.4 per cent to about 1.5 per cent by weight.
32. The method of controlling insects of clause 31 wherein said composition is diluted with water at a dilution rate of about 0.8 by weight.
33. The method of controlling insects of clause 31 wherein an application rate is from about 30 gallons per acre to about 100 gallons per acre.
34. A method of controlling fungi formed on fruits and vegetables by applying an environmentally compatible composition to the fruits and vegetables, said composition comprising from about 20 per cent to about 34 per cent surfactant and a terpene containing natural oil having a terpene content of at least about 50 per cent with the balance water, all by weight ; said composition is diluted with water at a dilution rate of from about 0.2 per cent to about 0.6 per cent by weight.
35. The method of controlling fungi of clause 34 wherein said composition is diluted with water at a dilution rate of about 0.4 by weight.
36. The method of controlling fungi of clause 34 wherein an application rate is from about 30 gallons per acre to about 100 gallons per acre.

## Claims

1. Use of a diluted composition obtained by dilution of an environmental compatible composition with water at a dilution rate of 0.25 to 1.5 wt.-% as an insecticide and fungicide
with trees and plants, fruits and vegetables to enhance the growth thereof by direct contact of the mold and mildew and insects,
said environmental compatible composition comprising prior to dilution by water from 25 per cent to 30 per cent surfactant and
from 3 per cent to 7 percent terpene containing natural oil having a terpene content of at least 50 per cent and
from 0.05 to 0.15 per cent butylated hydroxytoluene all by weight.

2. Use according to claim 1, whereby the diluted composition is sprayed at an application rate of from 120 liter per 4047 square meters (per acre) to 400 liter per 4047 square meters (per acre).

3. Use of a diluted composition obtained by dilution of an environmental compatible composition with water at a dilution rate of 0.2 to 0.6 wt.-% as a fungicide
with trees and plants, fruits and vegetables to enhance the growth thereof by direct contact of the mold and mildew,
said environmental compatible composition comprising prior to dilution by water from 25 per cent to 30 per cent surfactant and
from 3 per cent to 7 percent terpene containing natural oil having a terpene content of at least 50 per cent and
from 0.05 to 0.15 per cent butylated hydroxytoluene all by weight.

4. Use according to claim 3, whereby the diluted composition is sprayed at an application rate of from 120 liter per 4047 square meters (per acre) to 400 liter per 4047 square meters (per acre).

5. An environmental compatible composition
being formulated for use with various trees and plants, fruits and vegetables to enhance the growth thereof and to effectively control insects and fungi
said environmental compatible composition comprising
from 25 per cent to 30 per cent surfactant,
from 3 per cent to 7 percent terpene containing natural oil having a terpene content of at least 50 per cent, and
from 0.05 to 0.15 per cent butylated hydroxytoluene, all by weight.
